# EUROPEAN PATENT APPLICATION

(11) **EP 2 182 227 A1**
(43) Date of publication of application: **05.05.2010**
(21) Application number: 09380157.9
(22) Date of filing: 05.10.2009
(51) Int. Cl.: F16B 41/00

(54) **Security mechanism for screws, bolts or rivets**

(30) Priority: 30.10.2008 ES 200802226 U
(71) Applicant: Royal Pack Embalajes de Seguridad, S.L., 28806 Alcalá de Henares - Madrid (ES)
(72) Inventor: Martin Fidalgo, Carmelo Cayetano, Portal G-4C 28042 Madrid (ES)
(74) Representative: Gil-Vega, Victor

(57) **Abstract**

Security mechanism of the type applicable to screws, bolts or rivets, featuring a box shaped receptacle with an opening at the base through which a screw, bolt or rivet passes, but not the head. One side of the box is a top joined to a hinge on the other, with at least one tab on any of the sides, in such a way that when the top is closed, the tab is locked into the retainer located on the inside of the receptacle, thereby creating a male/female connection that prevents the mechanism from being opened without being destroyed and making it impenetrable as a result of the male/female lock being on the inside of the receptacle. The top can receive preferably indelible alphanumeric inscriptions, thereby making each mechanism unique.

## Description

### Object of the invention

This invention relates to a mechanism that can be applied to any type of screw, bolt or rivet, designed to prevent and/or leave a record of such screw, bolt or rivet being unfastened.

Screws, bolts and rivets are used to join at least two elements together, it therefore being of vital importance in certain circumstances to know whether or not they have been unfastened or eliminated to dismantle, substitute or modlify the elements joined. -

### Background of the invention

There are certain mechanisms on the market that seal screws, such as those that employ steel wire and lead seals. These mechanisms have the disadvantage of requiring an orifice or opening in the screw through which a steel wire passes for it to be sealed. In addition, lead seals hanging from thin steel wire can deteriorate and, given their nature, are not applicable to rivets.

There are also other seals on the market, with small caps normally made of plastic, that are connected to the head of the rivet or screw to be sealed, however they are easy to manipulate and even replace without leaving a trace.

### Description of the invention

The proposed invention is a mounted and closed receptacle or housing that protects the heads of fastening elements such as screws, bolts and rivets.

The mechanism consists of an open box shaped receptacle, made of a suitable material such as plastic, which has an opening at its base of a suitable diameter to allow the shaft of a screw, bolt or rivet to pass through and thus become perfectly secure once the fastening element has been tightened.

In order to close the receptacle and therefore the mechanism itself, it is equipped with a top connected to a hinge on one side and at least one tab on the other. Upon closing the top, the tab locks into a retainer tab fitted to the inside of the receptacle as a male-female connection that prevents it from being opened and thus makes it impenetrable from any side. This is because the retaining tabs are housed on the inside of the receptacle, which therefore makes the mechanism impossible to open without breaking it.

The top has been designed to enable preferably indelible alphanumeric inscriptions, for the purpose of associating the text or numbers of the plate with the security mechanism, without changing it, thereby making it a unique and irrepeatable element.

The mechanism has been designed to come in a comb presentation of a suitable number of units joined together for greater control and easy handling.

### Brief description of the drawings

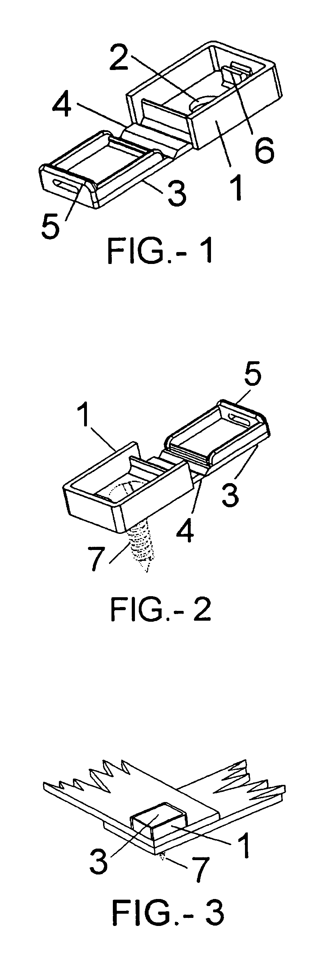

Figure 1. Shows a perspective of an open security mechanism before use, in which its components can be oserved: the box shaped receptacle, opening, top, hinge, tab and interior retainer tab that comprise the male-female connection.
Figure 2. Shows a perspective of an open security mechanism in which the above-mentioned elements can be seen with the screw to be sealed by the invention mechanism.
Figure 3. Shows a perspective of the mechanism after closure.

### Description of a preferred embodiment

The above-mentioned figures show that the invention is a security mechanism for screws, bolts and rivets.

It consists of a receptacle, made of an appropriate material, in the form of an open box (1) with an opening in the base (2) of a suitable diameter to enable a screw (7), bolt or rivet to pass through it.

To close the receptacle and therefore secure the security mechanism, it has been equipped with a top (3), which is joined to a hinge (4) on one side and at least one tab on any of the other sides (5).

When the top (3) is closed, the tab (5) locks into the retainer as a male-female connection, thus preventing it from being opened and the mechanism becoming impenetrable from any side. This is due to the fact that the tab (5) and retainer (6) are housed on the inside of the receptacle, the unit therefore being protected and impossible to open without being destroyed.

The top (3) can receive preferably alphanumeric inscriptions, for the purpose of associating the text or numbers of the plate with the security mechanism, without changing it, thereby making it a unique and irrepeatable element.

The mechanism has been designed to come in a comb presentation of a suitable number of units joined together for greater control and easy handling.

## Claims

1. Security mechanism of the type applicable to screws, bolts or rivets, featuring a box shaped receptacle (1) with an opening at the base (2) through which a screw (7), bolt or rivet passes, but not the head. One side of the box is a top (3) joined to a hinge on the other (4), with at least one tab on any of the sides (5), in such a way that when the top (3) is closed, the tab (5) is locked into the retainer (6) located on the inside of the receptacle, thereby creating a male/female connection that prevents the mechanism from being opened without being destroyed and making it impenetrable as a result of the male/female lock (5 and 6) being on the inside of the receptacle (1).

2. Security mechanism, as described above, featuring a top (3) capable of receiving preferably indelible alphanumeric inscriptions, thereby making each mechanism unique.
